# EUROPEAN PATENT SPECIFICATION

(11) **EP 2 720 331 B1**
(45) Date of publication and mention of the grant of the patent: **25.05.2016**
(21) Application number: 12799740.1
(22) Date of filing: 07.06.2012
(51) Int. Cl.: H02G 15/064, H01B 9/00, H01B 17/26

(54) **TERMINAL CONNECTING SECTION FOR DC CABLE**
ENDGERÄTANSCHLUSSTEIL FÜR GLEICHSTROMKABEL
SECTION DE CONNEXION DE BORNE POUR CÂBLE À C.C.

(30) Priority: 13.06.2011 JP 2011131659
(43) Date of publication of application: 16.04.2014
(73) Proprietor: Sumitomo Electric Industries, Ltd., Osaka-shi, Osaka 541-0041 (JP)
(72) Inventor: WATANABE, Youichi, Tokyo 108-0073 (JP); SAKAMAKI, Masatoshi, Tokyo 108-0073 (JP); ABE, Kazutoshi, Tokyo 108-0073 (JP)
(74) Representative: Regimbeau
(86) International application number: PCT/JP2012/064697
(87) International publication number: WO 2012/173041

(56) References cited:
- EP-A1- 1 326 316
- FR-A1- 2 752 106
- JP-A- 53 046 691
- JP-A- 2001 218 352
- JP-A- 2006 042 421
- JP-A- 2006 042 421
- JP-A- 2010 016 986
- JP-U- H02 136 434
- US-A1- 2009 000 803

## Description

### TECHNICAL FIELD

The present invention relates to a sealing end for a direct current (DC) cable.

### BACKGROUND ART

FR2752106 discloses a DC cable sealing according to the preamble of claim 1. As a power transmission cable, a power cable (XLPE cable) has been known such that electric insulation is applied to it by using cross-linked polyethylene (XLPE). It has been proposed to utilize such an XLPE cable as a DC power transmission cable, which forms an actual cable up to a voltage of approximately 150 kV. In general, a sealing end is connected to a terminating end of a power cable.

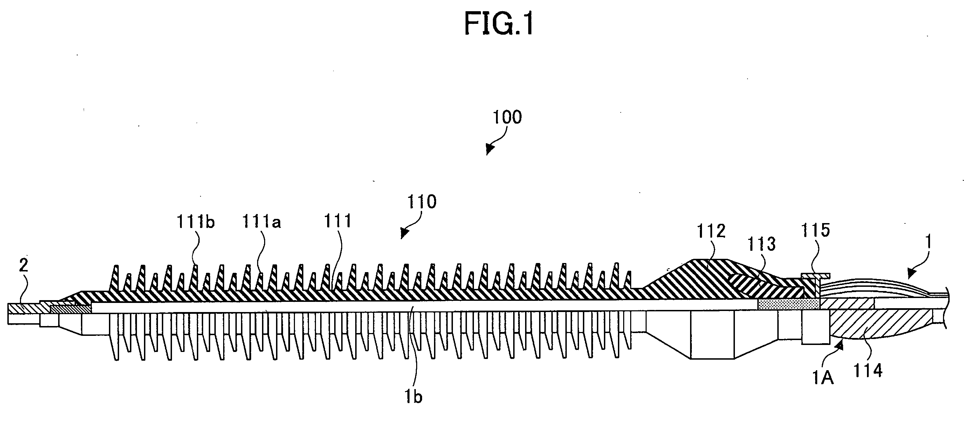

FIG. 1 is a cross-sectional view showing a typical structure of a sealing end (terminal connecting section) for an XLPE cable. Hereinafter, the sealing end for the XLPE cable may be simply called the "sealing end."

Though it differs depending on a voltage class or an installation environment, a sealing end 100 is a generic dry type sealing end which is adopted for an indoor facility so as to transmit DC power of less than or equal to 150 kV. The sealing end 100 includes an insulating sleeve 110, which is formed of, for example, silicon rubber which is superior in weathering resistance. The insulating sleeve 110 is a so-called "insulating sleeve with folds, which insulating sleeve is integrated with a stress cone." The insulating sleeve 110 includes a small-diameter portion 111 having folds 111a and 111b, and a large-diameter portion 112 having an outer diameter which is greater than that of the small-diameter portion 111. The large-diameter portion 112 of the insulating sleeve 110 accommodates a semiconductor portion 113, which is formed of semiconductive rubber.

The sealing end 100 is disposed on a cable insulator 1b of a cable terminating end 1A of a DC cable 1, while its inner diameter is enlarged. Here, the DC cable 1 is formed of the XLPE cable. The sealing end 100 has a simple insulating structure. After disposing the terminal connecting section 100 on the cable insulator 1b, it is not required to enclose insulating oil or the like in it.

The sealing end 100 having the above-described structure may be disposed, while the cable terminating end 1A is held straight without bending. Since it is difficult to dispose the sealing end 100 on the cable insulator 1b, it is considered that a limit of a length of the sealing end 100 may be approximately 2 m. Consequently, the sealing end 100, which has the structure shown in FIG. 1, is not suitable for a cable whose voltage class exceeds 150 kV, or a cable for an outdoor facility.

In FIG. 1, a protective metal fitting 115 is attached to the large-diameter portion 112, and the DC cable 1 extending from the protective metal fitting 115 is sealed with a seal portion 114. Additionally, a conductor pull-out rod 2 is attached to a tip of the small-diameter portion 111 of the insulating sleeve 110.

As another example of the dry type sealing end, there is proposed a sealing end having a structure such that a certain type of resistance layer is disposed on an exposed cable insulator, and a stress cone is disposed on the resistance layer (cf. Patent Document 1, for example). In the sealing end having such a structure, one end of the resistance layer is connected to a cable high voltage conductor, and the other end is connected to a cable external semiconductor layer, which is at ground potential, and thereby an electric field relaxation layer is formed. A stress cone is disposed on the electric field relaxation layer.

Further, as a sealing end for a higher voltage class exceeding 150 kV, there is proposed an oil immersed sealing end, which is formed of a combination of a reinforcing insulator and a condenser cone. The reinforcing insulator is formed by enclosing an insulating medium, such as a silicone oil, in a porcelain bushing, and by winding insulating paper or an insulating sheet (which is formed of polyethylene, for example), and a semiconductive tape around a cable insulator so as to form a shape of a suitable stress cone for relaxing an electric field, at a construction site. The condenser cone is produced in advance in a factory or the like by laminating the insulating paper and the metal foil.

In a sealing end having the above-described structure, volume resistivity of the reinforcing insulator may be greater than volume resistivity of the cable insulator. In such a case, when a DC voltage is applied, electric field distribution is shared among resistance pieces. Accordingly, a high voltage is applied to the insulating paper and the insulating sheet (which is formed of the polyethylene sheet) of the stress cone. In this manner, a high electric field is generated inside the stress cone, and a dielectric breakdown tends to occur inside the stress cone.

In order to prevent such a dielectric breakdown, a sealing end has been proposed such that a stress cone is formed of XLPE, which is the same as that of a cable insulator, and volume resistivity of the stress cone is adjusted to be the same as volume resistivity of the cable insulator (cf.

Patent Document 2, for example).

### RELATED ART DOCUMENT

### [PATENT DOCUMENT]

[Patent Document 1] International Publication No. WO 00/74191 A1
[Patent Document 2] Japanese Examined Utility Model Publication No. H01-35538

### SUMMARY OF THE INVENTION

### PROBLEM TO BE SOLVED BY THE INVENTION

As described above, Patent Document 1 discloses a structure such that an electric field relaxation layer is disposed on a cable insulator. The electric field relaxation layer can be formed, for example, by a method in which a material to be included in a resistance layer is processed to have a tape-like shape, and during assembling of the sealing end at a site, it is wound around the cable insulator. Alternatively, a method may be considered such that it is formed in advance in a factory as a molded insulating tube having an inner diameter which is less than an outer diameter of the cable insulator, and the molded insulator tube is disposed on the cable insulator, while the molded insulator tube is expanded, at a construction site. However, in either method, a problem is that cost of a material of the sealing end is increased, and that construction time becomes longer due to an increase in field work.

Further, it is difficult to adopt the sealing end described in Patent Document 1 for a sealing end for an extra high voltage cable, for which the voltage exceeds 200 kV, for example. Furthermore, it is difficult to adopt the sealing end described in Patent Document 1 for the above-described dry type sealing end which is installed in an outdoor facility in an environment having a high degree of contamination, such as salt damage. Namely, in the above-described cases, a rubber molded insulating tube may be required which has a greater surface leakage length corresponding to the required withstand voltage performance, and it is extremely difficult to attach such a rubber molded insulating tube to the cable by extending the inner diameter of the rubber molded insulating tube.

For a case of an oil immersed sealing end in which a condenser cone is utilized, a reinforcing insulator is formed on a cable insulator so as to form a suitable shape by using an insulating sheet and a semiconductive tape at a construction site, as described above. Alternatively, a task may be required such that only a stress cone such as that of disclosed in Patent Document 2 is formed in advance by molding; then it is disposed on a cable insulator, and a condenser is disposed on it, at a construction site.

Accordingly, a highly skilled worker is required, who can perform a task of hand winding of the insulating sheet and the semiconductive tape. In addition, a great amount of time is required to perform hand winding of the insulating sheet and the semiconductive tape. Prior to enclosing an insulating oil for removing air which is trapped in a wound portion, a task of evacuating air from the wound portion is required, and working hours are further elongated. Otherwise, it takes time to produce a component, such as the condenser cone. A problem is that cost for producing the sealing end is increased.

Accordingly, an object of the present invention is to provide a sealing end for a DC cable which can be applied to a DC cable of a high voltage class. Other objectives of the present invention will become more apparent by reading the detailed explanation of the present invention, while referring to the accompanying drawings.

### MEANS FOR SOLVING THE PROBLEM

According to an embodiment of the present invention, there is provided a DC cable sealing end, wherein the DC cable sealing end is configured to connect a DC cable terminating end, and the DC cable terminating end is sealed with a cable insulator. The DC cable sealing end includes a stress cone that is integrally molded to include an insulator portion and a semiconductor portion, wherein the insulator portion includes a high voltage side tapered portion, the high voltage side tapered portion being disposed between a high voltage side tip and a large diameter portion, wherein the stress cone has volume resistivity such that a ratio between volume resistivity of the insulator portion and volume resistivity of a cable insulator is greater than or equal to 0.01 and less than or equal to 0.5, and wherein thickness of the high voltage side tip is less than or equal to 6 mm; an insulating porcelain bushing including folds which are disposed on a surface of the insulating porcelain bushing; a lower metal fitting that seals a lower side opening of the insulating porcelain bushing; and an upper metal fitting that seals an upper side opening of the insulating porcelain bushing. In a state in which the DC cable sealing end connects to the DC cable terminating end, the stress cone is disposed on the cable insulator such that the high voltage side tip of the stress cone is positioned at a side of the upper metal fitting; the DC cable terminating end covered with the stress cone is covered with the insulating porcelain bushing, the lower metal fitting, and the upper metal fitting; and an insulating medium is enclosed inside the porcelain bushing.

Other objects, effects, and advantages of the present invention will become more apparent from the detailed description when read in conjunction with the accompanying drawings.

### EFFECT OF THE PRESENT INVENTION

According to the present invention, a DC cable sealing end can be provided which can be applied to a direct current cable of a high voltage class.

### BRIEF DESCRIPTION OF THE DRAWINGS

FIG. 1 is an upper half cross-sectional view showing a generic structure of a conventional sealing end for a conventional alternating current XLPE cable;
FIG. 2 is a right half cross-sectional view showing a state in which a DC cable sealing end according to a first embodiment of the present invention is attached to a direct current XLPE cable;
FIG. 3 is an upper half cross-sectional view of a stress cone of the DC cable sealing end according to the first embodiment;
FIG. 4 is an electrical characteristic diagram showing a relationship between a volume resistivity ratio of (an insulator portion of the stress cone, which is utilized for the DC cable sealing end according to the present invention)/(a cable insulator) and a break down voltage; and
FIG. 5 is an upper half cross-sectional view of a stress cone of a DC cable sealing end according to a second embodiment.

### EMBODIMENTS FOR CARRYING OUT THE INVENTION

Embodiments of the present invention are explained, while referring to the drawings. Here, in the drawings, the same symbols are attached to components having substantially the same functions, and duplicated explanations are omitted.

### [First embodiment]

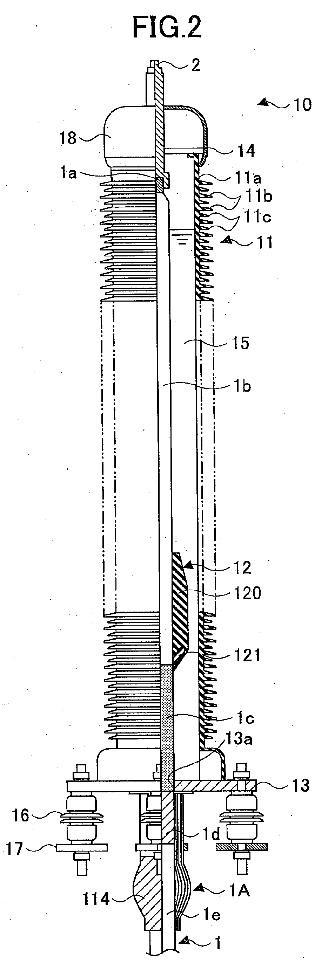

FIG. 2 shows a state in which a DC cable sealing end according to a first embodiment of the present invention is attached to a direct current XLPE cable.

The DC cable sealing end 10 is a sealing end having a so-called "insertion-type insulating structure." The DC cable sealing end 10 includes an insulating porcelain bushing 11 having an insulating property; a stress cone 12; a lower metal fitting 13 that seals a lower side opening; and an upper metal fitting 14 that seals an upper side opening. The stress cone 12 is a member which is disposed for relaxing an electric field stress, and it is disposed above a DC cable terminating end 1A, to which a stepwise stripping process is applied. The DC cable terminating end 1A is covered with the insulating porcelain bushing 11, the lower metal fitting 13, and the upper metal fitting 14. An insulating medium 15 is enclosed inside the insulating porcelain bushing 11. A stepwise stripping process is a process of exposing a conductor in a center by removing layers of a cable from the outside in a stepwise manner, on a layer-by-layer basis. Here, the cable has a layer structure including the layers from the center to an outer periphery.

The porcelain bushing 11 includes a porcelain bushing main body 11a and a plurality of folds 11b and 11c. The folds 11b and 11c are formed on an outer circumferential surface of the porcelain bushing main body 11a, and the folds 11b and 11c are evenly spaced apart. The porcelain bushing 11 is formed of a material having an insulating property, such as porcelain, rubber, plastic, or the like. In this embodiment, the porcelain bushing main body 11a and the plurality of folds 11b and 11c are integrally molded by using silicone rubber, thereby forming a single structure. The insulating porcelain bushing 11 may be a composite porcelain bushing having a composite structure such that a surface of an insulating tube, which is formed of fiber-reinforced plastic (FRP), is covered with a plurality of folds. Here, the plurality of folds forms an envelope, which envelope is formed of a polymer insulating material, such as silicone rubber or the like.

The stress cone 12 is a member which is formed at a factory by integrally molding an insulator portion 120 and a semiconductor portion 121. Details of the structure of the stress cone 12 are described later.

At a center portion of the lower metal fitting 13, an opening 13a is formed, into which the DC cable terminating end 1A of a DC cable 1 is inserted. The lower metal fitting 13 is fixed to a stand 17 through a plurality of supporting insulators 16. The upper metal fitting 14 is covered with a shield cover 18.

The DC cable 1 is an XLPE cable, for example. By applying the stepwise stripping process to the DC cable terminating end 1A of the DC cable 1, a conductor 1a, a cable insulator 1b, an external semiconductive layer 1c, and a shielding layer 1d are exposed from a cable sheath 1e.

### (Details of the stress cone)

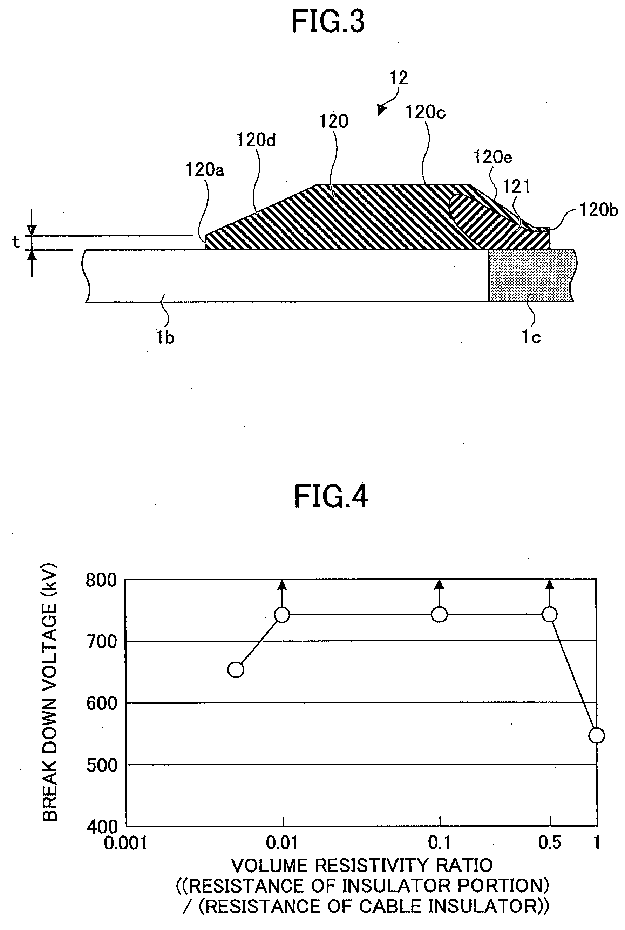

FIG. 3 is a cross-sectional view of the stress cone 12, which is shown in FIG. 2. When a high voltage is applied to the insulator portion 120 of the stress cone 12 by resistance balance, and an electric field value of the insulator portion 120 exceeds a permissible value, it can be a cause of occurrence of a dielectric breakdown of the stress cone 12. In order to prevent such a dielectric breakdown, volume resistivity of the insulator portion 120 may always be regulated to be lower than volume resistivity of the cable insulator 1b. It has been found by the study of the inventors that, when a difference between the volume resistivity of the insulator portion of the stress cone and the volume resistivity of the cable insulator is too large, a break down voltage as a whole of a connector is adversely affected. It can be considered that spatial charges which are accumulated on an interface between the cable insulator and the insulator portion of the stress cone are the reason for causing this. It has been found that, in order to satisfy a condition that the volume resistivity may always be regulated to be relatively small and spatial charges are prevented from accumulating, it is preferable that the volume resistivity of a material which forms the insulator portion 120 be such that a volume resistivity ratio with respect the volume resistivity of the cable insulator 1b (which is (the volume resistivity of the insulator portion 120)/(the volume resistivity of the cable insulator 1b)) is within a range which is greater than or equal to 0.01 and less than or equal to 0.5. Here, since the volume resistivity of the cable insulator is affected by temperature of the cable insulator and the volume resistivity of the insulator portion of the stress cone is affected by temperature of the insulator portion of the stress cone, it is important to select an insulating material, for which the above-described relation is maintained within a range from ambient temperature to 90 °C. Here, the ambient temperature means, for example, a temperature which can be achieved as an outside air temperature. In general, it is a temperature within a range from -30, °C to 40 °C.

Since the volume resistivity of the insulator portion 120 is in a relative relationship with the cable insulator 1b, required volume resistivity may vary depending on individual cases. For the cases in which the inventors confirmed an excellent characteristic, it was found to be effective when the insulator portion 120 has the volume resistivity such that the volume resistivity ratio (which is (the volume resistivity of the insulator portion) /(the volume resistivity of the cable insulator)) is within a range which is greater than or equal to 0.01 and less than or equal to 0.5. For example, when the volume resistivity of the cable insulator 1b was 1 × 10¹⁵ Ω cm, it was effective when the volume resistivity of the insulator portion 12 was from 1 × 10¹³ Ω cm to 5 × 10¹⁴ Ω cm.

By adjusting the volume resistivity of the insulator portion 120 to be the above-described volume resistivity, a voltage share is reduced for the stress cone 12 during application of a direct current voltage, and a major share of the applied voltage is borne by the cable insulator 1b.

When a difference between the voltage resistivity of the cable insulator 1b and the voltage resistivity of the insulator portion 120 is less than or equal to a two-digit numerical value, a space charge accumulating characteristic of the interface between the cable insulator 1b and the insulator portion 120 of the stress cone 12 does not adversely affect the break down voltage.

By using a stress cone which was molded by using ethylene propylene diene rubber (EPDM) as a material satisfying these conditions, samples 1 - 5 were produced, and electric testing was conducted with respect to these samples. As a result, the results which are shown in Table 1 and FIG. 4 were obtained. As it can be found from Table 1 and FIG. 4, for the sample 2, the sample 3, and the sample 4, for which the volume resistivity ratios between the cable insulator 1b and the insulator portion 12 of the stress cone were from 0.01 to 0.5, the break down voltages were greater than or equal to 740 kV, and excellent results were obtained.

Here, the break down voltage of the sample 1 was 650 kV. It was found that, by accumulation of space charges or the like due to a large difference between the volume resistivity of the cable insulator 1b and that of the insulator portion 120, electrical performance was lowered to 650 kV, compared to those of the samples 2, 3, and 4 of the embodiment of the present invention. For the sample 5, it can be considered that, since the voltage share of the insulator portion of the stress cone was increased, the break down voltage was lowered to 540 kV.

**[Table 1]**

| Sample No. | *Volume resistivity ratio | Break down voltage | Remark |
|---|---|---|---|
| 1 | 0.005 | 650 kV | Broken |
| 2 | 0.01 | > 740 kV | Not broken |
| 3 | 0.1 | > 740 kV | Not broken |
| 4 | 0.5 | > 740 kV | Not broken |
| 5 | 1.0 | 540 kV | Broken |

| | | | |
|---|---|---|---|
| (*Volume resistivity ratio of the insulator portion) | | | |

Here, the insulator portion 120 can be molded by using a synthetic elastomer, such as silicone rubber, besides ethylene propylene diene rubber (EPDM) .

The insulator portion 120 also includes a high voltage side tip 120a; a low voltage side base end 120d; a large diameter portion 120c; a high voltage side tapered portion 120d which is formed between the high voltage side tip 120a and the large diameter portion 120c; and a low voltage side tapered portion 120e which is formed between the lower voltage side base end 120b and the large diameter portion 120c. The insulator portion 120 is attached to the cable insulator 1b such that, when it is connected to the DC cable terminating end 1A, the high voltage side tip 120a is disposed at a side of the upper metal fitting 14, while the high voltage side tip 120a is directed upward, as shown in FIG. 2.

The semiconductor portion 121 is integrally molded with the insulator portion 120 such that the semiconductor portion 121 is accommodated (embedded) in the low voltage side tapered portion 120e. The semiconductor portion 121 is molded of, for example, semiconductive rubber, such as ethylene propylene diene rubber (EPDM) or silicone rubber.

### (Study on thickness of the high voltage side tip of the stress cone)

In a state in which the stress cone 12 is attached to the DC cable 1, boundary regions are formed on the high voltage side tip 120a by three types of insulating materials, which are the cable insulator 1b, the insulating medium 15, and the high voltage side tapered portion 120d. When a direct current voltage is applied to the boundary regions (which are referred to as "triple concentration region," hereinafter) formed by the three types of insulating materials, due to the difference among resistance values based on material characteristics of corresponding selected materials, space charges are accumulated in the triple concentration region or in the vicinity of the triple concentration region. In this manner, electric field distribution is generated, which may be determined by the balance among the resistances of selected materials as the triple concentration region.

Further, electric charges supplied from the conductor 1a, which is a high voltage portion of the DC cable 1, move inside the insulating medium 15 in a direction in which the semiconductor portion 121 of the grounded stress cone 12 is extended. As the thickness t of the high voltage side tip 120a of the insulator portion 120 of the stress cone 12 becomes greater and an area of the high voltage side tip 120a of the insulator portion 120 of the stress cone 12 becomes greater, a wall is formed which prevents moving of electric charges. Accordingly, electric charges are trapped and accumulated in the triple concentration region or in the vicinity of the triple concentration region.

The electric charges which are accumulated in the vicinity of the triple concentration region intensify the electric field during rapid voltage variation, such as during switching of a circuit, a polarity inversion time, or during intrusion of a surge voltage, and dielectric breakdown tends to occur in the triple concentration region. In order to smoothly move electric charges, which may have an adverse effect if they are accumulated in such a manner, it is effective to reduce the thickness of the high voltage side tip 120a of the stress cone 12 to be less than or equal to 6 mm. In this manner, accumulation of electric charges can be suppressed, which is a concern when a direct current voltage is applied.

However, when the thickness t of the high voltage side tip 120a is reduced to be extremely thin, and when the sealing end 10 for a direct current cable is disposed on the cable insulator 1b by enlarging the inner diameter thereof, tensile stress is always applied to the stress cone 12. Accordingly, a mechanical crack may occur in a thin portion during attachment of the DC cable sealing end 10, or during use after the attachment, and it can cause fatal electrical damage. It is preferable to define only the maximum thickness of the high voltage side tip 120a, and the minimum thickness of the high voltage side tip 120a may be suitably selected during designing.

In the experiment which was conducted by the inventors, when a polarity-inverted surge voltage was applied to the DC cable sealing end 10, an inner dielectric breakdown occurred, which was started in the vicinity of the triple concentration region. Here, for the DC cable sealing end 10, a stress cone having thickness t of 20 mm at the high voltage side tip 120a was utilized. Furthermore, when the thickness t of the high voltage side tip 120a was adjusted to be less than or equal to 6 mm, it was confirmed that the dielectric breakdown voltage increased. Table 2 below shows results of tests, which were conducted by varying the thickness t of the high voltage side tip of the stress cone, when the DC cable sealing end 10 was attached to a direct current cable for 250 kV.

**[Table 2]**

| Thickness t of the high voltage tip | Break down voltage | Breakdown position |
|---|---|---|
| 20 mm | 463 kV | Triple concentration region |
| 4 mm | Greater than or equal to 740 kV | Not broken |
| 6 mm | Greater than or equal to 740 kV | Not broken |

### (Study on the material of the insulating medium)

As the insulating medium 15, a liquid insulating medium may be used, which has lower volume resistivity than that of the cable insulator 1b at usage temperature (from ambient temperature to 90°C). By using the silicone oil as the insulating medium 15, a ratio of the voltage borne by the cable insulator 1b increases. Thus, it is effective for reducing accumulation of space charges in the triple concentration region. Contrary to this, when a gaseous insulating medium having high resistivity, such as SF6, is utilized, a high resistance region is formed around the stress cone 12. Thus, an electric field is converged in the vicinity of the semiconductor portion 121, which is a grounding electrode of the stress cone 12, and an inner dielectric breakdown tends to be caused.

By enclosing the insulating medium 15 having low volume resistivity (low-resistance) inside the insulating porcelain bushing 11, even if it is an insertion-type sealing end such that, when an alternating-current voltage is applied, an electric field converges on an outer surface of the insulating porcelain bushing 11 around the stress cone 12, the electric field distribution on the outer surface of the porcelain bushing 11 becomes relatively smooth distribution from the upper metal fitting 14 (which is a high voltage portion) toward the lower metal fitting 13 (which is a low voltage portion), when a direct current is applied. Thus, an effect can be obtained to prevent occurrence of low-voltage flashover due to local concentration on the outer surface of the insulating porcelain bushing 11 around the stress con 12.

### (DC cable sealing end forming method)

Next, an example of a method of forming the DC cable sealing end 10 is explained.

First, a stepwise stripping process is applied to the DC cable terminating end 1A, and the conductor 1a, the cable insulator 1b, the external semiconductive layer 1c, and the shielding layer 1d are exposed from the cable sheathe 1e. Next, the conductor 1a of the direct current cable 1 is connected to the conductor pull-out rod 2 by compression crimping.

Next, the stress cone 12, as the reinforcing insulator, is arranged around the cable insulator 1b and the external semiconductive layer 1c. Here, the stress cone 12 is attached across the cable insulator 1b and the external semiconductive layer 1c, which are exposed from the cable sheath 1e of the DC cable terminating end 1A. Further, a shielding process is applied; the lower metal fitting 13 is attached; the insulating porcelain bushing 11 is overlaid; the upper metal fitting 14 is attached; and thereby the DC cable terminating end 1A is sealed. Then, silicone oil as the insulating medium 15 is enclosed inside the insulating porcelain bushing 11. In this manner, the DC cable sealing end 10 is formed.

### (Effect of the first embodiment)

In the DC cable sealing end 10 according to this embodiment, the insulating material of the stress cone 12 has the volume resistivity, whose value is smaller than the volume resistivity of the cable insulator 1b by several digits; the thickness t of the high voltage side tip 120a of the insulator portion 120 is less than or equal to 6 mm; and further the triple concentration region is formed on the high voltage side tip 120a by the three types of insulating materials, which are the cable insulator 1b, the insulating medium 15, and the high voltage side tapered portion 120d of the stress cone 12. With this, the following effects can be obtained.
(1) Since electric charge accumulation can be reduced in the triple concentration region, the break down voltage can be increased, and it can be applied to a DC cable of a high voltage class.
(2) The task of winding the insulating sheet, the semiconductive tape, and the like can be omitted, and the tasks of disposing an elongated insulating sleeve and the resistance layer having an insulating tube-like shape on the cable insulator 1b, while expanding the inner diameter, become unnecessary. In this manner, time for constructing the DC cable sealing end at a site can be reduced.
(3) A level of required skills for a site worker can be lowered.

### [Second embodiment]

Next, a second embodiment of the present invention is explained.

As a structure for reducing electric charge accumulation in the triple concentration region, it is effective to form a low-resistance layer, namely, a layer having high conductivity by winding an insulating sheet, such as insulating paper or a polyethylene sheet having volume resistivity which is lower than the volume resistivity of the cable insulator 1b, around the triple concentration region. Namely, by introducing the structure in which electric charges supplied from the conductor 1a smoothly move toward a grounding electrode without staying at a local portion, the electric charge accumulation in the triple concentration region is reduced.

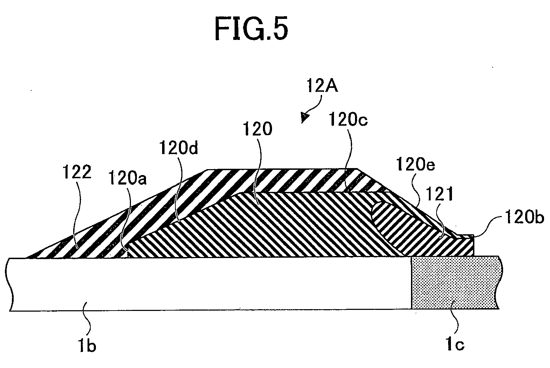

FIG. 5 is a cross-sectional view of a stress cone 12A which is disposed in a DC cable sealing end according to the second embodiment of the present invention. The stress cone 12A shown in FIG. 5 includes the insulator portion 120 and the semiconductor portion 121, which are integrally molded, similar to the stress cone 12 which is shown in FIG. 3. A composite reinforcing insulator is formed by winding a low-resistance insulating sheet 122 around the insulator portion 120, so that the high voltage side of the insulator portion 120, namely, the cable insulator 1b, the high voltage side tip 120a, the large diameter portion 120c, and the high voltage side tapered portion 120d are covered.

As the low-resistance insulating sheet 122, plastic, such as polyethylene, can be used. Here, the plastic has a coefficient of expansion which is substantially the same as a coefficient of expansion of the cable insulator 1b, so that it can follow expansion and contraction motion of the cable insulator 1b during application of an electrical current, so that no cracks and folds occur. Alternatively, high elongation insulating paper may be utilized, which has sufficiently large elongation to follow the expansion of the DC cable 1. In this embodiment, for example, a fixed-width polyethylene sheet having a width of approximately 10 cm is used as the low-resistance insulating sheet 122. The low-resistance layer is formed by winding the polyethylene sheet along the shape of the stress cone 12.

Here, the low-resistance insulating sheet 122 may be wound around the whole of or a portion of the high voltage side tip 120a and the high voltage side tapered portion 120d, instead of winding it around the large diameter portion 120c of the insulator portion 120. For a case in which the low-resistance insulating sheet 122 is wound around the portion of the high voltage side tip 120a and the high voltage side tapered portion 120d, an outer diameter of winding may be the same as the outer diameter of the large diameter portion 120c of the insulator portion 120. Alternatively, the low-resistance insulating sheet 122 may be wound around it, so that the thickness becomes greater than the outer diameter of the large diameter portion 120c. Further, the low-resistance insulating sheet 122 may be wound not only around the high voltage side tip 120a, the high voltage side tapered portion 120d, and the large diameter portion 120c of the insulator portion 120, but also around the low voltage side tapered portion 120e. Furthermore, the low-resistance insulating sheet 122 may be wound around the low voltage side base end 120b. In addition, a winding length of the low-resistance insulating sheet 122 with respect to the DC cable 1 in a longitudinal direction may be the length across the whole cable insulator 1b, which is exposed from the insulator portion 120.

With the DC cable sealing end according to the second embodiment, effects which are similar to those of the first embodiment can be obtained.

In the above-described first and second embodiments, insulating oil is utilized as the insulating medium 15. However, the present invention can also be applied to a case in which insulating gas is utilized.

The present invention is not limited to the above-described embodiments of the DC cable sealing end, and various modified examples and improved examples may be made without departing from the scope of the present invention.

The present application is based on and claims the benefit of priority of Japanese Patent Application No. 2011-131659, filed on June 13, 2011, the entire contents of which are hereby incorporated by reference.

### INDUSTRIAL APPLICABILITY

The present invention can be applied to a direct current cable sealing end.

### LIST OF REFERENCE SYMBOLS

- 1:: DC cable
- 1A:: DC cable terminating end
- 1a:: Conductor
- 1b:: Cable insulator
- 1c:: External semiconductive layer
- 1d:: Shielding layer
- 1e:: Cable sheath
- 2:: Conductor pull-out rod
- 10:: DC cable sealing end
- 11:: Porcelain bushing
- 11a:: Porcelain bushing main body
- 11b, 11c:: Folds
- 12:: Stress cone
- 13:: Lower metal fitting
- 13a:: Opening
- 14:: Upper metal fitting
- 15:: Insulating medium
- 16:: Supporting insulator
- 17:: Stand
- 18:: Shield cover
- 100: Sealing end
- 110:: Insulating sleeve
- 111:: Small-diameter portion
- 111a, 111b:: Folds
- 112:: Large-diameter portion
- 113:: Semiconductor portion
- 120:: Insulator portion
- 120a:: High voltage side tip
- 120b:: Low voltage side base end
- 120c:: Large diameter portion
- 120d:: High voltage side tapered portion
- 120e:: Low voltage side tapered portion
- 121:: Semiconductor portion
- 122:: Low-resistance insulating sheet

## Claims

1. A DC cable sealing end configured to connect to a DC cable terminating end, the DC cable terminating end being sealed with a cable insulator, the DC cable sealing end comprising:
a stress cone that is integrally molded to include an insulator portion and a second portion, wherein the insulator portion includes a high voltage side tapered portion, the high voltage side tapered portion being disposed between a high voltage side tip and a large diameter portion;
an insulating porcelain bushing including folds which are disposed on a surface of the insulating porcelain bushing;
a lower metal fitting that seals a lower side opening of the insulating porcelain bushing; and
an upper metal fitting that seals an upper side opening of the insulating porcelain bushing,
wherein, in a state in which the DC cable sealing end connects to the DC cable terminating end, the stress cone is disposed on the cable insulator such that the high voltage side tip of the stress cone is positioned at a side of the upper metal fitting; the DC cable terminating end covered with the stress cone is covered with the insulating porcelain bushing, the lower metal fitting, and the upper metal fitting; and an insulating medium is enclosed inside the porcelain bushing, **characterized in that** the second portion of the stress cone is a semiconductor portion and wherein the stress cone has volume resistivity such that a ratio between volume resistivity of the insulator portion and volume resistivity of the cable insulator is greater than or equal to 0.01 and less than or equal to 0.5, and wherein thickness of the high voltage side tip is less than or equal to 6 mm.

2. The DC cable sealing end according to claim 1,
wherein the stress cone is molded of a synthesized elastomer.

3. The DC cable sealing end according to claim 1 or claim 2,
wherein volume resistivity of the insulator portion of the stress cone is greater than or equal to 10¹³ Ω cm in a range from an ambient temperature to 90 °C.

4. The DC cable sealing end according to any one of claims 1 - 3,
wherein the insulating medium is a liquid insulator having volume resistivity which is less than that of the cable insulator in the range from the ambient temperature to 90 °C.

5. The DC cable sealing end according to any one of claims 1 - 4,
wherein the insulating porcelain bushing has a single structure or a composite structure which is molded of porcelain or silicone rubber.

6. The DC cable sealing end according to any one of claims 1 - 5,
wherein the insulator of the stress cone is attached to the cable insulator such that the high voltage side tip is positioned at the side of the upper metal fitting in the state in which the DC cable sealing end connects to the DC cable terminating end, and
wherein a low-resistance layer is formed to cover the insulator portion of the stress cone and a portion of the cable insulator exposed toward a high voltage side, wherein the low-resistance layer has volume resistivity which is less than the volume resistivity of the cable insulator.

7. The DC cable sealing end according to claim 6,
wherein the low-resistance layer is formed by winding an insulating sheet around the large diameter portion of the insulator portion of the stress cone, the high voltage side tapered portion, the high voltage side tip, and the portion of the cable insulator exposed toward the high voltage side, wherein the insulating sheet has volume resistivity which is less than the volume resistivity of the cable insulator.

## Patentansprüche

1. Gleichstromkabel-Abdichtende, das für ein Verbinden mit einem Gleichstromkabel-Endverschluss konfiguriert ist, wobei der Gleichstromkabel-Endverschluss mit einem Kabel-Isolator abgedichtet ist, wobei das Gleichstromkabel-Abdichtende Folgendes aufweist:
einen Spannungsentlastungskegel, der integral geformt ist, um einen Isolatorteil und einen zweiten Teil zu umfassen, wobei der Isolatorteil einen hochspannungsseitigen Kegelteil umfasst, wobei der hochspannungsseitigen Kegelteil zwischen einer hochspannungsseitigen Spitze und einem Teil mit großem Durchmesser angeordnet ist;
eine Porzellan-Isolierbuchse mit Falten, die auf einer Fläche der Porzellan-Isolierbuchse angeordnet sind;
eine untere Metall-Verschraubung, die eine untere Seitenöffnung der Porzellan-Isolierbuchse verschließt; und
eine obere Metall-Verschraubung, die eine obere Seitenöffnung der Porzellan-Isolierbuchse verschließt,
wobei, in einem Zustand, in dem das Gleichstromkabel-Abdichtende an den Gleichstromkabel-Endverschluss anschließt, der Spannungsentlastungskegel auf solche Weise auf dem Kabel-Isolator angeordnet ist, dass die hochspannungsseitige Spitze des Spannungsentlastungskegels auf einer Seite der oberen Metall-Verschraubung positioniert ist; der vom Spannungsentlastungskegel bedeckte Gleichstromkabel-Endverschluss ist von der Porzellan-Isolierbuchse, der unteren Metall-Verschraubung und der oberen Metall-Verschraubung verdeckt; und ein Isoliermedium ist auf der Innenseite der Porzellanbuchse eingeschlossen,
**dadurch gekennzeichnet, dass** der zweite Teil des Spannungsentlastungskegels ein Halbleiterabschnitt ist, und wobei der Spannungsentlastungskegel einen solchen Volumenwiderstand aufweist, dass ein Verhältnis von Volumenwiderstand des Isolatorteils zum Volumenwiderstand des Kabel-Isolators größer als oder gleich groß wie 0,01 und kleiner als oder gleich groß wie 0,5 ist, und wobei die Dicke der hochspannungsseitigen Spitze kleiner als oder gleich groß wie 6 mm ist.

2. Gleichstromkabel-Abdichtende nach Anspruch 1, wobei der Spannungsentlastungskegel aus einem synthetisierten Elastomer geformt ist.

3. Gleichstromkabel-Abdichtende nach Anspruch 1 oder Anspruch 2,
wobei der Volumenwiderstand des Kabel-Isolatorteils des Spannungsentlastungskegels größer als oder gleich groß wie 10¹³ Ω cm in einem Bereich von einer Umgebungstemperatur bis 90 °C ist.

4. Gleichstromkabel-Abdichtende nach einem der Ansprüche 1 bis 3,
wobei das Isoliermedium ein flüssiger Isolierstoff ist, der einen Volumenwiderstand aufweist, der niedriger ist als der des Kabel-Isolators im Bereich von einer Umgebungstemperatur bis 90 °C

5. Gleichstromkabel-Abdichtende nach einem der Ansprüche 1 bis 4,
wobei die Porzellan-Isolierbuchse einen einfachen Aufbau oder einen Verbundaufbau aufweist, der aus Porzellan oder Silikonkautschuk geformt ist.

6. Gleichstromkabel-Abdichtende nach einem der Ansprüche 1 bis 5,
wobei der Isolator des Spannungsentlastungskegels auf solche Weise am Kabel-Isolator befestigt ist, dass die hochspannungsseitige Spitze an der Seite der oberen Metall-Verschraubung in dem Zustand positioniert ist, in dem das Gleichstromkabel-Abdichtende an den Gleichstromkabel-Endverschluss anschließt, und
wobei eine niederohmige Schicht zum Bedecken des Isolatorteils des Spannungsentlastungskegels und eines Teils des zur Hochspannungsseite hin exponierten Kabel-Isolators, wobei die niederohmige Schicht einen Volumenwiderstand aufweist, der niedriger ist als der Volumenwiderstand des Kabel-Isolators.

7. Gleichstromkabel-Abdichtende nach Anspruch 6, wobei die niederohmige Schicht durch Wickeln einer Isolierfolie um den Teil des Isolatorteils mit großem Durchmesser des Spannungsentlastungskegels, den hochspannungsseitigen Kegelteil, die hochspannungsseitige Spitze und den zur Hochspannungsseite hin exponierten Kabel-Isolator, wobei die Isolierfolie einen Volumenwiderstand aufweist, der niedriger ist als der Volumenwiderstand des Kabel-Isolators.

## Revendications

1. Embout de fermeture de câble à courant continu configuré pour être relié à une extrémité de terminaison de câble courant continu, l'extrémité de terminaison de câble à courant continu étant fermée avec un isolant de câble, l'embout de fermeture de câble courant continu comprenant :
un cône de contrainte qui est intégralement moulé afin de comprendre une partie d'isolant et une seconde partie, la partie d'isolant comprenant une partie effilée à haute tension, la partie effilée à haute tension étant disposée entre une extrémité à haute tension et une partie de grand diamètre :
une bague en porcelaine isolante qui comprend des plis qui sont disposés sur une surface de la bague en porcelaine isolante ;
un accessoire métallique inférieur qui ferme une ouverture inférieure de la bague en porcelaine isolante ; et
un accessoire métallique supérieur qui ferme une ouverture supérieure de la bague en porcelaine isolante,
dans lequel, lorsque l'embout de fermeture de câble à courant continu est relié à l'extrémité de terminaison de câble courant continu, le cône de contrainte est disposé sur l'isolant de câble de sorte que l'extrémité à haute tension du cône de contrainte soit positionnée au niveau d'un côté de l'accessoire métallique supérieur ; l'extrémité de terminaison de câble à courant continu recouverte avec le cône de contrainte est recouverte avec la bague en porcelaine isolante, l'accessoire métallique inférieur, et l'accessoire métallique supérieur ; et un milieu isolant est contenu dans la bague en porcelaine,
**caractérisé en ce que** la seconde partie du cône de contrainte est une partie semi-conductrice, et dans lequel le cône de contrainte possède une résistivité volumique de sorte qu'un rapport entre la résistivité volumique de la partie d'isolant et la résistivité volumique de l'isolant de câble soit supérieur ou égal à 0,01 et inférieur ou égal à 0,5, et dans lequel l'épaisseur de l'extrémité à haute tension est inférieure ou égale à 6 mm.

2. Embout de fermeture de câble à courant continu selon la revendication 1,
dans lequel le cône de contrainte est moulé avec un élastomère de synthèse.

3. Embout de fermeture de câble à courant continu selon la revendication 1 ou 2,
dans lequel la résistivité volumique de la partie d'isolant du cône de contrainte est supérieure ou égale à 10¹³ Ω cm sur une plage comprise entre la température ambiante et 90°C.

4. Embout de fermeture de câble à courant continu selon l'une quelconque des revendications 1 à 3,
dans lequel le milieu isolant est un isolant liquide qui présente une résistivité volumique inférieure à celle de l'isolant de câble sur une plage comprise entre la température ambiante et 90°C.

5. Embout de fermeture de câble à courant continu selon l'une quelconque des revendications 1 à 4,
dans lequel la bague en porcelaine isolante possède une structure simple ou une structure composite qui est moulée en porcelaine ou en caoutchouc de silicone.

6. Embout de fermeture de câble à courant continu selon l'une quelconque des revendications 1 à 5,
dans lequel l'isolant du cône de contrainte est relié à l'isolant de câble de sorte que l'extrémité à haute tension soit positionnée au niveau du côté de l'accessoire métallique supérieur lorsque l'embout de fermeture de câble à courant continu est relié à l'extrémité de terminaison de câble à courant continu, et
dans lequel une couche à faible résistance est formée afin de recouvrir la partie d'isolant du cône de contrainte et une partie de l'isolant de câble exposée vers un côté à haute tension, la couche à faible résistance ayant une résistivité volumique inférieure à celle de l'isolant de câble.

7. Embout de fermeture de câble à courant continu selon la revendication 6,
dans lequel la couche à faible résistance est formée en enroulant une feuille isolante autour de la partie à grand diamètre de la partie d'isolant du cône de contrainte, de la partie effilée à haute tension, de l'extrémité à haute tension, et de la partie de l'isolant de câble exposée vers l'extrémité à haute tension, la feuille isolante ayant une résistivité volumique inférieure à celle de l'isolant de câble.
